# FASCICULE DE BREVET EUROPEEN

(11) **EP 2 712 774 B1**
(45) Date de publication et mention de la délivrance du brevet: **07.09.2016**
(21) Numéro de dépôt: 13199250.5
(22) Date de dépôt: 23.03.2009
(51) Int. Cl.: B60S 1/38, B60S 1/52

(54) **Balai d'essuyage pour vitres de véhicule**
Wischer für ein Fahrzeugfenster
Wiper for vehicle windows

(30) Priorité: 26.03.2008 FR 0801632
(43) Date de publication de la demande: 02.04.2014
(62) Demande divisionnaire de: 09723955.2
(73) Titulaire: Valeo Systèmes d'Essuyage, 78321 Le Mesnil Saint Denis (FR)
(72) Inventeur: Caillot, Gérald, 78720 Cernay la Ville (FR); Jarasson, Jean-Michel, 72821 Le Mesnil Saint Denis (FR)

(56) Documents cités:
- WO-A-2007/000346
- DE-A1- 10 056 705
- US-A- 4 194 261
- US-A- 4 967 437

## Description

La présente invention concerne un balai d'essuyage pour vitres de véhicule.

Il existe aujourd'hui une technologie concernant les balais d'essuyage pour vitres de véhicule connue sous le nom de « balai souple » ou « balai plat » (« Flat Blade » en anglo-saxon) et dont un exemple de réalisation est décrit dans la demande internationale n° WO2007/000346.

Cette technologie « balai plat » consiste en une structure construite autour d'un élément central constitué par un support longitudinal en matériau plastique semi-rigide sur lequel sont rapportés divers autres éléments fonctionnels.

Un premier élément fonctionnel est une tige métallique logée dans une cavité longitudinale du support. Cette tige métallique a pour double fonction d'assurer, d'une part, à l'ensemble du balai d'essuyage la rigidité requise pour une bonne tenue mécanique, ainsi que la répartition de la pression exercée par le bras d'entraînement sur le pare-brise C'est pourquoi on la désigne souvent sous le terme de « vertèbre » (« spline » en anglo-saxon).

Un deuxième élément fonctionnel est une lame d'essuyage en élastomère fixée au support longitudinal par l'intermédiaire d'une griffe extrudée avec le support.

Enfin, un troisième élément fonctionnel est un accessoire destiné à améliorer la qualité de l'essuyage. En général, cet accessoire est en élastomère et est assemblé au support longitudinal par divers moyens, notamment par clippage.

Un premier type d'accessoire est, par exemple, un dispositif de projection d'un liquide de lavage approprié qui permet, par action conjuguée avec le mouvement de balayage de la lame d'essuyage, d'éliminer certaines particules solides pouvant se fixer sur les vitres, comme les projections de boue ou les résidus d'insectes écrasés contre le pare-brise. De manière pratique, un tel dispositif de projection comporte au moins une rampe de projection de forme sensiblement cylindrique disposée latéralement le long du support longitudinal. Dans une version mono-rampe, le dispositif de projection ne comporte qu'une seule rampe, tandis que, dans une version bi-rampes, le dispositif comporte deux rampes de part et d'autre du support longitudinal. De plus, les rampes sont munies de trous permettant la projection du liquide de lavage sur le pare-brise.

Un autre type d'accessoire peut être un déflecteur aérodynamique qui utilise le vent relatif du véhicule pour augmenter la force de contact de la lame d'essuyage contre la vitre à essuyer.

La demande internationale précitée illustre un balai d'essuyage relevant de la technologie « balai plat » dont l'accessoire combine en un seul élément un dispositif de projection de liquide avec un déflecteur aérodynamique.

Cependant, il convient de remarquer que, dans des conditions de température extérieure négative, le liquide de lavage contenu dans la ou les rampes de projection peut geler du fait, par exemple, de l'absence de produit anti-gel dans le liquide. Le gel du liquide de lavage dans les rampes a pour conséquences néfastes, d'une part, de bloquer la fonction de projection du balai d'essuyage, et, d'autre part, de contribuer à rigidifier l'ensemble de la structure du balai, ce qui est particulièrement pénalisant dans le cadre de la technologie « balai souple » qui repose précisément sur la flexibilité de la structure.

On connaît par ailleurs de la demande de brevet allemand n° 102 34 267 un balai d'essuyage relevant de la technologie « balai souple » qui comporte des éléments chauffants destinés à réchauffer la structure du balai. Toutefois, ce balai d'essuyage connu ne présente pas de rampes de projection de liquide de lavage.

Aussi, un but de l'invention est de proposer un balai d'essuyage pour vitres de véhicules du type « balai souple » qui permettrait de remédier aux inconvénients mentionnés ci-dessus quant au gel du liquide de lavage contenu dans une ou plusieurs rampes de projection, lorsque le balai d'essuyage est muni de telles rampes.

Ce but est atteint, conformément à l'invention, grâce à un balai d'essuyage pour vitres de véhicule, comprenant des éléments de structure constitués au moins par :
- un support longitudinal,
- une tige de rigidification disposée dans un logement dudit support,
- une lame d'essuyage fixée audit support,
- un accessoire comportant au moins une rampe de projection d'un liquide de lavage, ledit accessoire étant assemblé audit support,
remarquable en ce que ledit balai d'essuyage comprend en outre des moyens de chauffage dudit liquide de lavage, lesdits moyens de chauffage étant incorporés à au moins un desdits éléments de structure.

Selon l'invention, lesdits moyens de chauffage comprennent au moins un film résistif chauffant disposé sur au moins une face du support longitudinal.

Dans le cadre d'un mode de réalisation, non revendiqué, ledit film résistif chauffant est disposé sur au moins une face de ladite tige de rigidification. L'avantage de cette solution est de bénéficier d'une bonne propagation de la chaleur vers la ou les rampes de projection du fait de la nature métallique de la tige de rigidification.

Cet avantage peut encore être amplifié si, ledit film résistif chauffant est disposé sur une face de la tige de rigidification, sur une bordure latérale de ladite tige, c'est-à-dire dans la partie de la tige se trouvant au plus près des rampes de projection.

Selon l'invention ledit film résistif chauffant est disposé sur au moins une face du support longitudinal.

Dans une deuxième variante non revendiquée, ledit film résistif chauffant est disposé sur une face d'assemblage dudit accessoire au support longitudinal.

Selon un mode de réalisation non revendiqué, lesdits moyens de chauffage comprennent au moins un fil résistif chauffant incorporé audit accessoire.

En particulier, il est prévu que ledit fil résistif chauffant est disposé à l'intérieur de ladite rampe de projection, pour un chauffage direct du liquide de lavage par le fil chauffant.

Dans une première variante non revendiquée, l'accessoire comportant un déflecteur aérodynamique, ledit fil résistif chauffant est incorporé audit déflecteur, à proximité de ladite rampe de projection.

Dans une deuxième variante non revendiquée, ledit fil résistif chauffant est coextrudé avec l'accessoire, à proximité de ladite rampe de projection. Cette variante présente l'avantage d'une plus grande facilité de mise en oeuvre, coextuder le fil résistif chauffant avec l'accessoire étant plus simple à réaliser qu'enfiler le fil a posteriori dans une rampe de projection par exemple.

L'invention concerne également un système d'essuyage remarquable en ce qu'il comporte un balai d'essuyage selon l'invention.

La description qui va suivre en regard des dessins annexés, donnés à titre d'exemples non limitatifs, fera bien comprendre en quoi consiste l'invention et comment elle peut être réalisée.
- Les figures 1 a à 1 c sont des vues en coupe de variantes non revendiquées.
- Les figures 2a et 2b sont des vues en coupe du premier mode de réalisation de l'invention.
- Les figures 3a et 3b sont des vues en coupe de variantes non revendiquées.
- La figure 4 est une vue en coupe d'une première variante non revendiquée.
- La figure 5 est une vue en coupe d'une deuxième variante non revendiquée.
- Les figures 6a et 6b sont des vues en coupes de troisièmes variantes non revendiquées.

Sur l'ensemble des figures, est représenté en coupe un balai d'essuyage pour vitres de véhicules comprenant un support longitudinal 10 en matériau plastique semi-rigide extrudé. Ce support 10 comporte, conformément à la technologie « balai souple » ou « balai plat » (« Flat Blade »), un logement 11 destiné à recevoir une tige métallique 20 de rigidification, ou « vertèbre », s'étendant sensiblement sur toute la longueur du balai d'essuyage. Le support 10 comporte également une griffe longitudinale 12 dans laquelle est introduite une lame 30 d'essuyage en élastomère.

Sur le support longitudinal 10 est assemblé et fixé un accessoire 40 réalisé par extrusion indépendamment du support 10. Dans les divers exemples de réalisation illustrés sur les figures, l'accessoire 40 comprend un dispositif de projection de fluide constitué d'au moins une rampe longitudinale 42a, 42b percée de trous 421 a, 421 b, afin de permettre la projection d'un liquide de lavage par exemple sur une vitre du véhicule. L'accessoire 40 est en général constitué d'un seul matériau, ici un élastomère extrudé.

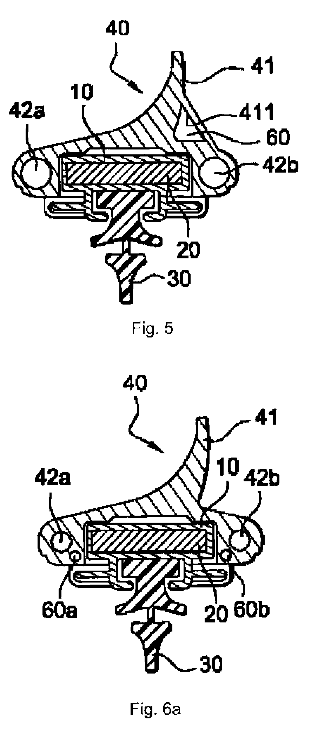

Par ailleurs, on peut observer sur les figures la présence sur l'accessoire 40 d'un déflecteur aérodynamique 41 destiné à améliorer le contact de la lame 30 d'essuyage contre la vitre du véhicule. Il faut cependant souligner que, dans la plupart des cas, ce déflecteur aérodynamique 41 n'est pas non revendiqué essentiel pour l'invention. Seul le mode de réalisation non revendiqué de la figure 5 implique la présence d'un tel déflecteur.

Afin de réchauffer le liquide de lavage contenu dans la ou les rampes de projection qui se trouverait gelé dans des conditions de température extérieure négative, il est prévu par l'invention d'incorporer à au moins un élément de la structure du balai d'essuyage des moyens de chauffage du liquide de lavage. Ainsi, en amenant le liquide de lavage en phase liquide à une température d'au moins 0°C, il est possible, d'une part, de restaurer la fonction d'arrosage du dispositif de projection, fonction autrement bloquée par le gel du liquide, et, d'autre part, de redonner à la structure du balai d'essuyage la flexibilité qu'exige par nature même la technologie « balai souple », cette flexibilité pouvant être limitée du fait de la raideur introduite par le liquide gelé dans les rampes de projection.

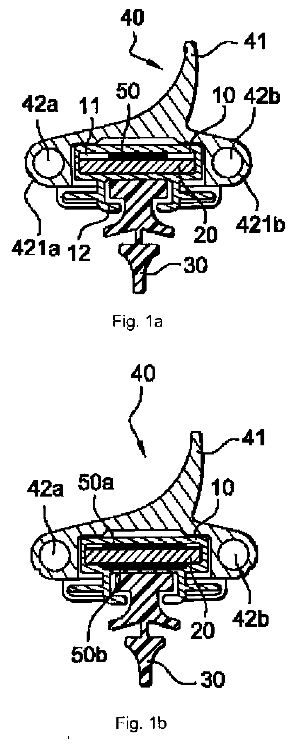

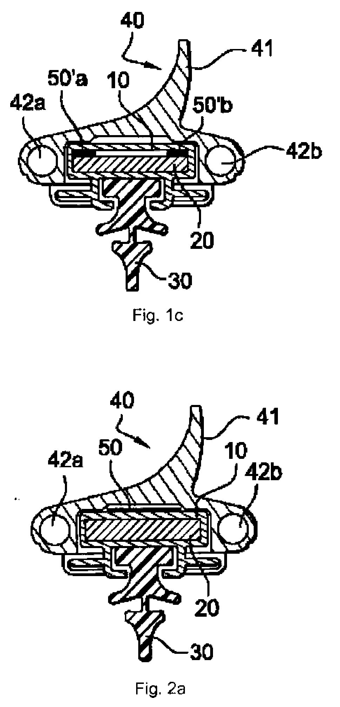

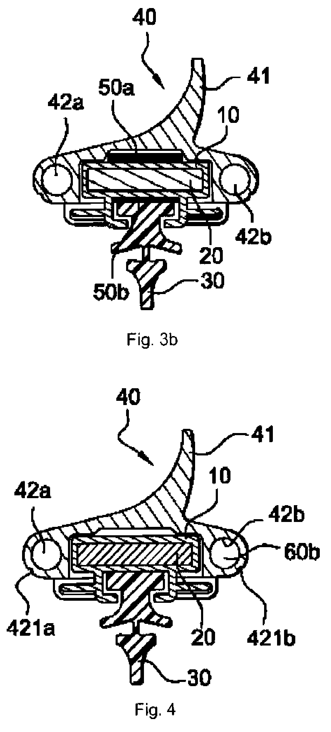

Les figures 1 a à 3a concernent un premier mode de réalisation dans lequel les moyens de chauffage sont constitués par au moins un film résistif chauffant, tandis que les figures 4 à 6b illustrent un deuxième mode de réalisation non revendiqué mettant en oeuvre au moins un fil résistif chauffant en tant que moyens de chauffage.

Les variantes des figures 1a à 3a du premier mode de réalisation comportent un seul film résistif chauffant disposé sur divers éléments de la structure du balai d'essuyage.

Sur la figure 1a, le film résistif chauffant 50 est disposé sur une face de la tige métallique 20 de rigidification. Ce film 50 est constitué par exemple d'une bande continue autocollante pouvant être coupée à la longueur désirée et collée sur une surface quelconque après avoir retiré la pellicule de protection de l'adhésif. non revendiquée

Cette variante non revendiquée présente l'avantage de mettre à profit la bonne conductibilité thermique du métal de la tige 20 en permettant une diffusion rapide de la chaleur produite par le film 50 vers les rampes 42a, 42b de projection. Cette diffusion rapide de la chaleur à travers la tige 20 de rigidification a également l'avantage de rendre plus homogène la température de la structure, ce qui évite de dégrader certains éléments, notamment ceux en matériau plastique ou en élastomère, qui pourraient subir des déformations ou des contraintes locales dans des zones où la température deviendrait trop élevée.

Dans la variante de la figure 2a, le film résistif chauffant 50 est disposé sur une face du support longitudinal 10.

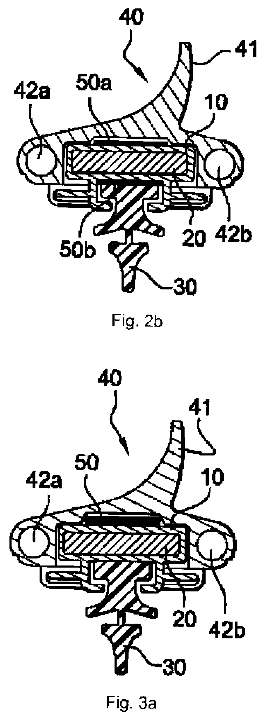

Dans la variante de la figure 3a, le film résistif chauffant 50 est disposé sur l'accessoire 40, sur la face par laquelle l'accessoire 40 est assemblé au support 10.

Les variantes des figures 1b à 3b comportent deux films résistifs chauffants 50a, 50b permettant d'obtenir un chauffage plus efficace et une meilleure répartition de la chaleur produite dans la structure du balai d'essuyage.

Sur la figure 1b, les deux films 50a, 50b sont disposés sur les deux faces opposées de la tige 20 de rigidification.

Sur la figure 2b, les deux films 50a, 50b sont disposés sur les deux faces opposées du support longitudinal 10.

Enfin, sur la figure 3b, les deux films 50a, 50b sont disposés respectivement sur la face d'assemblage de l'accessoire 40 sur le support longitudinal 10 et sur la face dudit support longitudinal 10, opposée à ladite face d'assemblage.

La figure 1c représente une variante non revendiquée particulièrement avantageuse en ce qu'elle prévoit deux films résistifs chauffants 50'a, 50'b disposés sur une même face de la tige métallique 20 de rigidification, chacun de ces films étant placés sur une bordure latérale de la tige, ceci dans le but de se trouver au plus près respectivement des rampes 42a, 42b de projection. On comprend que cette configuration favorise la diffusion de la chaleur produite par les films vers les rampes 42a, 42b pour un réchauffement plus efficace et plus rapide du liquide de lavage contenu dans ces rampes. On peut également envisager d'ajouter deux autres films résistifs chauffants en bordure latérale de l'autre face de la tige 20 de rigidification, opposée à la précédents.

Dans l'exemple de mise en oeuvre du deuxième mode de réalisation non revendiqué, illustré sur la figure 4, des fils résistifs chauffants 60a, 60b sont placés respectivement à l'intérieur des rampes 42a, 42b de projection. On obtient ainsi un chauffage direct du liquide de lavage garantissant un excellent rendement énergétique puisque pratiquement toute la puissance calorifique dégagée par effet Joule dans les fils chauffants 60a, 60b est transmise au liquide.

Cependant, la variante non revendiqué de la figure 4 présente l'inconvénient que les fils chauffants peuvent obstruer les trous 421 a, 421 b de projection, du fait même de leur présence à l'intérieur des rampes 32a, 42b.

Pour remédier à cet inconvénient, la variante non revendiqué de la figure 5 propose d'incorporer un fil résistif chauffant 60 à proximité de la rampe 42b de projection, à l'intérieur d'une cavité longitudinale 411 réalisée dans le déflecteur aérodynamique 41. Bien entendu, dans ce cas, seul le liquide de lavage contenu dans la rampe 42b pourra être dégelé de manière substantielle. Cette limitation n'a cependant pas de véritable conséquence pratique, l'essentiel étant que la fonction d'arrosage soit récupérée, ne serait-ce qu'à 50%.

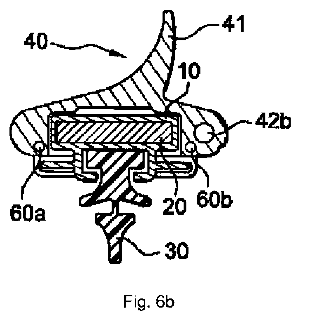

L'inconvénient mentionné plus haut lié à la présence de fils à l'intérieur des rampes est également résolu par les variantes des figures 6a, 6b qui ont en commun la particularité de présenter deux fils chauffants 60a, 60b coextrudés avec l'accessoire 40, l'un au moins de ces fils chauffants étant disposés à proximité d'une rampe de projection.

Sur la figure 6a, les fils chauffants 60a, 60b sont placés respectivement à proximité des rampes 42a, 42b, dans une version bi-rampes de l'accessoire 40.

Sur la figure 6b, seul le fil chauffant 60b est placé à proximité d'une rampe 42b de projection, dans une version mono-rampe de l'accessoire 40. Dans cet exemple, le fil chauffant 60a est optionnel et peut être utilisé pour réchauffer le reste de la structure du balai d'essuyage.

Cette réalisation par coextrusion est plus simple à mettre en oeuvre que celle par enfilement de fils chauffants dans des rampes, comme sur la figure 4, ou dans une cavité longitudinale, comme sur la figure 5. De plus, l'accessoire 40 ainsi coextrudé avec des fils chauffants peut être facilement découpé à la longueur désirée de la même manière que l'on dénude un fil électrique.

## Revendications

1. Balai d'essuyage pour vitres de véhicule, comprenant des éléments de structure constitués au moins par :
- un support longitudinal (10),
- une tige (20) de rigidification disposée dans un logement (11) dudit support (10),
- une lame (30) d'essuyage fixée audit support (10),
- un accessoire (40) comportant au moins une rampe (42a, 42b) de projection d'un liquide de lavage, ledit accessoire (40) étant assemblé audit support (10),
**caractérisé en ce que** ledit balai d'essuyage comprend en outre des moyens (55 ; 50a, 50b) de chauffage dudit liquide de lavage, lesdits moyens de chauffage comprennent au moins un film résistif chauffant (50 ; 50a, 50b) disposé sur au moins une face du support longitudinal (10).

2. Balai d'essuyage selon la revendication 1, dans lequel ledit film résistif chauffant (50 ; 50a, 50b) est sous la forme d'une bande continue autocollante.

3. Balai d'essuyage selon l'une des revendications précédentes **caractérisé en ce que** le balai d'essuyage comprend deux films 50a, 50b disposés sur deux faces opposées du support longitudinal (10).

4. Système d'essuyage comportant un balai d'essuyage selon l'une des revendications précédentes.

## Patentansprüche

1. Wischerblatt für Fahrzeugscheiben, das Strukturelemente enthält, die mindestens bestehen aus:
- einem Längsträger (10),
- einer Versteifungsstange (20), die in einer Aufnahme (11) des Trägers (10) angeordnet ist,
- einer Wischlamelle (30), die am Träger (10) befestigt ist,
- einem Zubehörteil (40), das mindestens eine Rampe (42a, 42b) zum Spritzen einer Waschflüssigkeit aufweist, wobei das Zubehörteil (40) auf den Träger (10) montiert ist, **dadurch gekennzeichnet, dass** das Wischerblatt außerdem Heizeinrichtungen (50; 50a, 50b) der Waschflüssigkeit enthält, wobei diese Heizeinrichtungen mindestens eine Widerstandsheizfolie (50; 50a, 50b) enthalten, die auf mindestens einer Fläche des Längsträgers (10) angeordnet ist.

2. Wischerblatt nach Anspruch 1, wobei die Widerstandsheizfolie (50; 50a, 50b) in Form eines selbstklebenden Endlosstreifens vorliegt.

3. Wischerblatt nach einem der vorhergehenden Ansprüche, **dadurch gekennzeichnet, dass** das Wischerblatt zwei Folien (50a, 50b) enthält, die auf zwei gegenüberliegenden Flächen des angeordnet sind.

4. Wischsystem, das ein Wischerblatt nach einem der vorhergehenden Ansprüche aufweist.

## Claims

1. Wiper blade for vehicle windows, comprising structural elements consisting at least of:
- a longitudinal support (10),
- a stiffening rod (20) arranged in a housing (11) of said support (10),
- a wiper strip (30) fixed to said support (10),
- an accessory (40) comprising at least one manifold (42a, 42b) for spraying a washing liquid, said accessory (40) being assembled to said support (10),
**characterized in that** said wiper blade additionally comprises means (50; 50a, 50b) for heating said washing liquid, said heating means comprising at least one heating resistive film (50; 50a, 50b) arranged on at least one face of the longitudinal support (10).

2. Wiper blade according to Claim 1, in which said heating resistive film (50; 50a, 50b) is in the form of a continuous self-adhesive strip.

3. Wiper blade according to either of the preceding claims, **characterized in that** the wiper blade comprises two films 50a, 50b arranged on two opposite faces of the longitudinal support (10).

4. Wiper system comprising a wiper blade according to any one of the preceding claims.
